# EUROPÄISCHE PATENTSCHRIFT

(11) **EP 2 665 923 B1**
(45) Veröffentlichungstag und Bekanntmachung des Hinweises auf die Patenterteilung: **30.09.2015**
(21) Anmeldenummer: 12701334.0
(22) Anmeldetag: 17.01.2012
(51) Int. Cl.: F03B 13/18, F03B 13/16

(54) **SYSTEM UND VERFAHREN ZUR ENERGIEAUSKOPPLUNG AUS MEERESWELLEN**
SYSTEM AND METHOD FOR EXTRACTING ENERGY FROM SEA WAVES
SYSTÈME ET PROCÉDÉ D'EXTRACTION D'ÉNERGIE DE LA HOULE

(30) Priorität: 18.01.2011 DE 102011008877
(43) Veröffentlichungstag der Anmeldung: 27.11.2013
(73) Patentinhaber: NEMOS GmbH, 47057 Duisburg (DE)
(72) Erfinder: PECKOLT, Jan Peter, 47058 Duisburg (DE)
(74) Vertreter: Tanner, Lukas
(86) Internationale Anmeldenummer: PCT/EP2012/050648
(87) Internationale Veröffentlichungsnummer: WO 2012/098120

(56) Entgegenhaltungen:
- WO-A2-2009/108052
- FR-A1- 2 869 368
- GB-A- 2 015 657
- US-A- 5 066 867
- US-A- 5 808 368

## Beschreibung

Die Erfindung betrifft ein System und ein Verfahren zur Energieauskopplung aus Meereswellen mit Hilfe eines durch die Bewegung der Meereswellen angeregten, mindestens teilweise in das Meerwasser eintauchenden Auftriebskörpers, dessen Längserstreckung ein Vielfaches seiner Höhe und Breite beträgt und von dem aus Seile zu unterhalb des Auftriebskörpers vorgesehenen, voneinander beabstandeten ortsfesten Bezugspunkten abgespreizt geführt sind, wobei mindestens eines der Seile als Führungsseil zur Führung des Auftriebskörpers auf einer Bahnkurve und mindestens ein Seil als Arbeitsseil zur Übertragung der Wellenenergie an mindestens einen Energiewandler vorgesehen ist.

Als Energiewandler werden im Zusammenhang mit der vorliegenden Erfindung solche Systeme oder Vorrichtungen verstanden, die dafür vorgesehen sind, die mechanische Energie des Auftriebskörpers unter Verwendung mechanischer Hilfsmittel in elektrische oder hydraulische Energie umzuwandeln.

Zur Erreichung umweltpolitischer Ziele, zur Unabhängigkeit von fossilen Energieträgern und zum Ausstieg aus der Kernenergie wird der Ausbau emeuerbarer Energien weltweit voran getrieben. Eine große Energiemenge steht in den Weltmeeren u.a. in Form der Meereswellen zur Verfügung, deren Potential zur Stromerzeugung derzeit kaum wirtschaftlich genutzt wird.

In den vergangenen Jahrzehnten wurde weltweit auf diesem Gebiet geforscht und eine große Anzahl an Konzepten zur Nutzung der Energie aus Meereswellen entwickelt. So entstand ein breites Spektrum an Systemen, jedoch kamen von denen nur wenige über den Status des Prototyps hinaus. Ein Großteil jener Projekte, die Prototypen hervorbrachten, scheiterte letztlich bei Tests an der Gewalt extremer Seegangsbedingungen. Zudem bereiteten die korrosiven Umgebungsbedingungen massive Probleme in Bezug auf die Haltbarkeit der Anlagen und deren Funktionssicherheit. Andere Modelle blieben in natürlichen Seegangsbedingungen hinter ihrer prognostizierten Systemleistung weit zurück. Nur wenige der Projekte erreichten den Status einer kommerziellen Nutzung mit Einspeisung in bestehende Energieversorgungsnetze.

Die vorliegende Erfindung befasst sich ausschließlich mit solchen Systemen, bei denen eine Relativbewegung von vertikal, horizontal oder kombiniert in beide Richtungen bewegten Körpern in elektrische oder hydraulische Energie umgewandelt wird. Diese sogenannten Systeme mit bewegten Körpern haben in der Literatur die größte Beachtung gefunden, da mit ihnen, zumindest unter theoretischen Gesichtspunkten, sehr hohe Wirkungsgrade erzielbar sind.

Ein wesentliches Bewertungkriterium der Systeme zur Wellenumwandlung ist der technische Wirkungsgrad, d.h. der Quotient aus Anlagenleistung und der verfügbaren Leistung aus der Welle. Für einen gegeben Standort und eine gegebene Anlagengröße bestimmt er maßgeblich die Höhe des Energieertrages. Neben dem technischen Wirkungsgrad sind für eine wirtschaftliche Arbeitsweise vor allem die Kosten des Systems entscheidend. Diese setzen sich zusammen aus den Kosten zur Erstellung, zur Instandhaltung und Entsorgung der Anlage, sowie den Kosten der benötigten Infrastruktur. Gesamtwirtschaftlich betrachtet kann eine einfache robuste Konstruktion mit mäßigem Wirkungsgrad einer technisch effizienten Anlage, die hohe Investitions- und Instandhaltungskosten erfordert, überlegen sein. Bei der Entwicklung von neuen Systemen zur Energiewandlung aus Meereswellen müssen deshalb beide Kriterien betrachtet werden, um geringe Stromerzeugungskosten erzielen zu können.

Aus der Fachliteratur (Dr.-Ing.Kai-Uwe Graw, "Wellenenergie - eine hydromechanische Analyse", ISSN 0179-9444, IGAW BUGH Wuppertal, Abschnitt 8, Seite 8-8) ist das Funktionsprinzip eines schwimmenden Körpers bekannt geworden, der durch Wellen zu einer Bewegung gegenüber einem ortsfesten Bezugspunkt angeregt wird und dabei einen elektrischen Generator antreibt. Der Auftriebskörper ist dazu über ein Seilsystem, sowohl in Wellenrichtung, als auch entgegen der Wellenrichtung, an zwei beabstandeten Festpunkten am Meeresboden so verankert, dass die Seile etwa unter 45° abgespreizt werden. Eines der Verankerungsseile ist als Arbeitsseil mit zwei auf dem Auftriebskörper angeordneten Hydraulikzylindern verbunden, das andere ist als Führungsseil für den Auftriebskörper sowohl am Auftriebskörper als auch am Meeresboden fixiert. Sowohl beim Auf- und Ab- als auch beim Vor- und Zurückbewegen des Auftriebskörpers infolge der Wellenbewegungen führt das erstgenannte Verankerungsseil (Arbeitsseil) eine Relativbewegung gegenüber dem Körper aus, wobei zwei Hydraulikzylinder betätigt werden. Der dabei erzeugte hydraulische Druck wird in einem auf dem Auftriebskörper angeordneten Energiewandler zur generatorischen Stromerzeugung genutzt.

Das andere Verankerungsseil (Führungsseil) führt während dessen den Auftriebskörper, in einer durch die Abspannrichtungen der Seile festgelegter Orientierung zur Welle, auf einer Bahnkurve (Kreisbogensegment) um den ortsfesten Befestigungspunkt.

Die französische Patentanmeldung FR 2 869 368 A1 beschreibt ein System zur Energiegewinnung aus Meereswellen, bei dem, wie bei dem von "Graw" beschriebenen System, Wellenbewegungen, sowohl in horizontaler, wie in vertikaler Richtung, ausgenutzt werden können. Zu diesem Zweck ist ein Auftriebskörper in Form einer scheibenförmigen Plattform mit Seilen verbunden, die an einem Ende jeweils an drei voneinander beabstandeten Befestigungspunkten am Meeresboden verankert sind. Von dort werden die Seile über auf der Plattform angeordnete Umlenkrollen zu einem gemeinsamen, zentral unter der Plattform angeordneten Ballastkörper geführt, der an den Enden der Seile befestigt ist. Aufgrund seines Eigengewichts hält der Ballastkörper die Seile stets unter Spannung. Beim Auf- und Ab- bzw. Hin- und Herbewegen der Plattform unter dem Einfluß der Wellen werden die Umlenkrollen von den darüber geführten Seilen in alternierenden Drehrichtungen angetrieben und wandeln die Energie durch Antrieb eines angeschlossenen Generators oder einer Hochdruckpumpe, die ihrerseits eine Turbinen-Generatoreneinheit antreibt, um.

Beide Systeme haben Nachteile. Das von "Graw" beschriebene System hat den Nachteil, dass eine effiziente Bahnkurve, auf der sich der Auftriebskörper bewegen kann, nur erreichbar ist, wenn die Wellenrichtung der Orientierung des Systems entspricht. Änderungen der Wellenrichtung kann sich das System nicht anpassen, so dass Leistungsverluste in Kauf genommen werden müssen.

Als weiterer Nachteil wird angesehen, dass die Energie wandelnden Einrichtungen und deren erforderliche Steuerungen unmittelbar auf dem Auftriebskörper angeordnet sind, wo sie der korrosiven Atmosphäre der Meeresluft und dem Seewasser unmittelbar ausgesetzt sind. Funktionsstörungen und Ausfälle sind deshalb bei diesem beschriebenen System zu erwarten, in jedem Fall ist ein hoher Wartungsaufwand zu betreiben. Zudem führt die Masse der Einrichtungen der Energiewandlung und Steuerung zu einer Erhöhung der Gesamtmasse des bewegten Systems, wodurch die Bewegungseigenschaften negativ beeinflusst werden.

Die vorstehend beschriebenen Nachteile sind teilweise auch bei dem System der FR 2 869 368 A1 zu erwarten; auch hier sind die Energie umwandelnden Einrichtungen unmittelbar auf dem Auftriebskörper, der Plattform, angeordnet. Die Ausrichtung des Auftriebskörpers zur Wellenrichtung ist bei diesem System zwar nicht von Bedeutung, da der Auftriebskörper auf Grund seiner scheibenförmigen Gestalt eine in allen Richtungen gleiche Wirkungsweise erlaubt. Allerdings wird hierdurch der Vorteil des länglichen Auftriebskörpers aufgegeben, der bei Ausrichtung quer zur Wellenfortschrittsrichtung von einem Energiestrom größerer Breite erfasst wird. Eine bestimmte Bahnkurve ist mit dem bekannten System beim Bewegen des Auftriebskörpers nicht beschreibbar, da das System keine gezielte Führung erfährt.

Schließlich ist durch die US 5,066,867 A ein System, bekannt geworden, bei dem die Energie umwandelnden Einrichtungen unterhalb des Meeresspiegels stationär angeordnet sind, so dass auch hier Nachteile durch Korrosion und durch schwierige Wartungsarbeiten zu erwarten sind. Auch mit dieser Anordnung ist beim Bewegen des Auftriebskörpers keine Bahnkurve beschreibbar, da das System keine gezielte Führung erfährt.

Vergleichbare Systeme sind auch aus der GB 2 015 657 A sowie aus der US 5 808 368 A bekannt.

Ausgehend von dem von Graw beschriebenen Stand der Technik besteht die Aufgabe der vorliegenden Erfindung in der Schaffung eines Systems zur Energieauskopplung aus Meereswellen, das eine effizientere Nutzung der Wellenenergie mit hohen Energieerträgen auch bei am Standort variierenden Wellenrichtungen ermöglicht und dass bei niedrigen Investitionskosten und einfacher Technik eine hohe Verfügbarkeit bei geringer Wartung aufweist. Zudem soll das System geeignet sein, Synergieeffekte durch die Kombination mit Offshore Windkraftanlagen zu nutzen.

Zur Lösung der Aufgabe wird erfindungsgemäß vorgeschlagen, dass die Befestigung aller Seile an einer gemeinsamen zentralen Befestigungseinrichtung am

Auftriebskörper erfolgt, die eine freie Einstellbarkeit des Auftriebskörpers mindestens in Bezug auf die Wellenrichtung gestattet. Dies kann insbesondere dann, wenn der Auftriebskörper in Bezug auf die Wellenrichtung räumlich frei ausrichtbar ist, verwirklicht werden, indem beispielsweise zur Befestigung aller Seile am Auftriebskörper im Bereich der zentralen Hochachse eine Drehachse verwendet wird. Dieser kann durch einen um die Hochachse des Auftriebskörpers drehbar gelagerten Drehteller dargestellt werden, an dem die Seile befestigt sind. Alternativ kann zur genannten Einstellbarkeit des Auftriebskörpers ein Schienensystem verwendet werden, das eine Bewegung der Angriffspunkte der Seile relativ zum Auftriebskörper ermöglicht. Dieses besteht aus einer endlos gebogenen Schiene, an dem Schlitten auf einer etwa horizontalen Ebene umlaufen, an denen die Seile befestigt sind. In beiden Fällen ist der Auftriebskörper gegenüber der Befestigung drehbar bzw. einstellbar. Nach der Ausrichtung des Auftriebskörpers parallel zum Wellenberg erfolgt eine translatorische Bewegung des Auftriebskörpers entlang einer Kreisbogensegmentbahn um den wellenabgewandten ortsfesten Befestigungspunkt bzw. die wellenabgewandten ortsfesten Befestigungspunkte.

Während beim Stand der Technik die Seile den Auftriebskörper in einer durch die ortsfesten Befestigungspunkte am Meeresboden vorgegebenen bevorzugten Position halten, die vorzugsweise der hauptsächlich zu erwartenden Wellenrichtung entspricht, ist der Auftriebskörper der Erfindung derart beweglich gelagert, dass er auch bei sich ändernder Wellenrichtung in eine Position verschwenken kann, in der eine optimale Energieausbeute zu erwarten ist. Da der Auftriebskörper nach der Erfindung länglich ausgebildet ist, wobei seine Längserstreckung ein Vielfaches seiner Höhe und Breite beträgt, wird beim Eintreffen eines Wellenberges das dem Wellenberg nächstliegende Ende des Auftriebskörpers zuerst erfasst, wodurch der Körper in eine zum Wellenkamm parallele Lage rotiert wird und somit optimal zur Welle ausgerichtet wird. Dieser Effekt ähnelt dem aus der Schifffahrt bekannten "Querschlagen" eines Schiffs. Zur gezielten und verbesserten Beeinflussung des Bewegungsverhaltens kann der Auftriebskörper zusätzlich mit Leitprofilen versehen werden.

In einer günstigen Ausgestaltung der Erfindung ist vorgesehen, die vom Auftriebskörper ausgehenden Seile am Auftriebskörper passiv anzuschlagen, von wo aus, jedes Seil, gegebenenfalls über im Bereich der ortsfesten Bezugspunkte vorgesehene Umlenkmittel, zum Energiewandler und zu Einrichtungen zur Steuerung des Seilzugs und/oder der Seillänge geführt ist. "Passiv" bedeutet in diesem Zusammenhang, dass die Seile über eine Befestigungsvorrichtung mit dem Auftriebskörper verbunden sind und dass keine Relativbewegungen zwischen den Seilen und dem Auftriebskörper stattfinden, die zur Stromerzeugung genutzt werden. Der Begriff Steuerung wird hier nicht beschränkend verwendet, sondern soll auch Regelungen, z.B. Steuerungen mit Rückschleife, umfassen.

Während in Gebieten geringer Wassertiefe, in denen die vorherrschende Wellenrichtung konstant ist, die beschriebene Anlage mit nur zwei Seilen realisiert werden kann, sind nach einem besonderen Merkmal der Erfindung vorzugsweise mindestens drei Seile an dem Auftriebskörper befestigt und jedes der Seile ist über das ihm zugeordnete Umlenkmittel, das an jedem der mindestens drei ortsfesten Bezugspunkte befestigt ist, zu dem Energiewandler, sowie der Einrichtung zur Seilsteuerung geführt.

Nach einem besonderen Merkmal der Erfindung ist vorgesehen, dass jedes der Seile bedarfsweise als Führungsseil für den Auftriebskörper und als Arbeitsseil zur Übertragung der mechanischen Energie an einen Energiewandler einsetzbar ist.

Die beschriebene Anordnung führt, insbesondere bei frei ausrichtbarem Auftriebskörper, dazu, dass die Bewegungsbahn des Systems entsprechend der Wellenfortschrittsrichtung ausgerichtet werden kann. Somit arbeitet das System bei unterschiedlichen Wellenrichtungen stets wirksam, so dass auch an Standorten variierender Wellenrichtungen hohe Energieerträge erzielt werden können.

Die Erfindung sieht weiterhin vor, dass zur Veränderung der Bewegungsbahn des Auftriebskörpers die wellenabgewandten Führungsseile in einstellbarer Länge fixierbar und/oder während der Bewegung steuerbar sind. Auf diese Weise ist ein für die jeweiligen Wellenbedingungen angepasster Bahnverlauf des Auftriebskörpers einstellbar und ggf. auch während der Wellenbewegung im Sinne einer effektiven Nutzung korrigierbar. Die Länge der Seile an der wellenabgewandten Seite bestimmt den Radius und die Steigung der Bahnkurve, auf der sich der an dem Seilende befestigte Auftriebskörper zwangsläufig bewegt, während die Steuerung und Energieübertragung über das jeweilige wellenzugewandte Seil bzw. die Seile erfolgen.

Vorteilhafterweise sind nach einem anderen Merkmal der Erfindung die wellenzugewandten Arbeitsseile während der Bewegung des Auftriebskörpers steuerbar. Sie werden bei Eintreffen eines Wellenberges arretiert bis eine angestrebte Eintauchtiefe, bzw. angestrebte Zugkraft auf das Seil, erreicht ist. Im darauffolgenden Zeitabschnitt wird eine Bewegung des Auftriebskörpers unter definierter Kraft oder Geschwindigkeit zugelassen, wobei der Auftriebskörper über die Seile und deren Umlenkungen mechanische Energie an den Energiewandler überträgt.

Die Bewegungscharakteristik des Systems (wie z.B. der Radius des Kreisbogens, die Steigung, Amplitude, Eintauchtiefe, Geschwindigkeiten und Bewegungsrichtung des Auftriebskörpers) können durch die Einstellung der jeweiligen Seillängen und der auf den Körper wirkenden Kräfte über das Steuerungssystem/Regelungssystem eingestellt werden. Im Allgemeinen ist es somit möglich, dass über das Zusammenwirken der Bewegung aller drei Seile hydromechanisch effiziente Bewegungsverläufe im dreidimensionalen Raum durchgeführt werden können. Über alle der drei Seile kann dabei entweder Energie entnommen werden, Energie engebracht werden oder keine Energiewandlung stattfinden. Auf diese Weise können zur Erzielung einer optimalen Leistung die Parameter jederzeit an die aktuellen Wellenbedingungen (wie z.B. Wellenhöhe, Wellenlänge, Periode und Wellenrichtung) angepasst werden.

Nach einem besonderen Merkmal der Erfindung ist zur verbesserten Nutzung des Richtungsspektrums der Wellen die Steuerung der einzelnen Arbeitsseile an die jeweilige Fortschrittsrichtung der einfallenden Wellenberge anpassbar. Das lässt sich beispielsweise bei Anordnungen mit zwei Arbeitsseilen dadurch verwirklichen, dass für das Seil, aus dessen Richtung eine einzelne Welle einfällt, eine größere Bewegungsamplitude zugelassen wird.

Nach Erreichen des Wellenberges bewegt sich der Körper selbsttätig in seine Ausgangsposition zurück. Es hat sich gezeigt, dass der Auftriebskörper durch eine aktive Rückführung schneller in seine Ausgangsposition zurück gelangt. In experimentellen Untersuchungen konnten mit dieser Maßnahme erhebliche Leistungssteigerungen im Bereich kurzer Wellen hoher Frequenz erzielt werden. Zudem wird durch die gesteuerte Zug- und Rückstellkraft ein erhöhtes Eintauchen des Körpers im Wellental ermöglicht. Dies führt, wie in analytischen Betrachtungen nachgewiesen, zu weiteren Leistungssteigerungen. Deshalb wird erfindungsgemäß vorgeschlagen, dass zur aktiven Rückführung des auf einen Wellenberg gehobenen Auftriebskörpers, bzw. zur Steuerung seiner Eintauchtiefe, auf jedes der wellenzugewandten Arbeitsseile eine steuerbare Zugkraft aufbringbar ist.

Bevorzugt ist vorgesehen, dass der Energiewandler ein elektrischer Generator ist und das wellenzugewandte Arbeitsseil, bzw. die wellenzugewandten Arbeitsseile, zum direkten oder indirekten Antrieb des Generators eingerichtet sind. Der Generator kann in an sich bekannter Weise über eine Seilscheibe angetrieben werden, über die das zur Energieübertragung vorgesehene Seil geführt ist. Drehrichtungswechsel können dabei über Freiläufe kompensiert werden. Alternativ können Lineargeneratoren oder andere bekannte Energiewandler eingesetzt werden, die z.B. über Druckluft- oder Hydraulikzylinder direkt oder indirekt durch das Seil oder die Seile betrieben werden.

Zum Schutz vor der Gewalt extremer Wetterbedingungen kann nach einem anderen Vorschlag der Erfindung der Auftriebskörper in Wassertiefen geringer Wasserbewegung abgesenkt werden. Dazu kann ein Teil des Auftriebskörpers vorübergehend mit Seewasser geflutet werden. Er wird vorzugsweise nur so weit geflutet, dass er auf die Arbeits- und Führungsseile weiterhin eine nach oben gerichtete Kraft ausübt. Somit kann er nach Abklingen extremer Wetterbedingungen durch Fieren der Seile wieder an die Oberfläche geführt werden. Das Auspumpen des Körpers erfolgt durch eine Pumpe. Diese kann durch eine auf der Oberfläche des Körpers installierte Solarzelle oder eine Batterie betrieben werden. Alternativ kann mit Hilfe eines permanenten Auftriebs im unteren Bereich des Aufriebskörpers die Entleerung erfolgen.

Um eine verbesserte Anpassungsfähigkeit an die Wellenbedingungen zu erreichen und die Gefahr der Beschädigung umliegender Bauwerke oder Wasserfahrzeuge für den Fall eines Loslösens des Körpers von seinen Verankerungen zu reduzieren, wird des Weiteren vorgeschlagen, dass der Auftriebskörper ein geringes Eigengewicht bei hohen Auftriebskräften aufweist, wobei die Auftriebskräfte durch gezieltes Fluten des Auftriebskörpers veränderbar sind. Eine auf Kunststoff basierende Bauweise ist vorteilhaft. Denkbar ist die Gestaltung des Auftriebskörpers als Druckkörper, dessen Form durch einen Innendruck, der den Atmosphärendruck übersteigt, unterstützt wird. Somit können auch flexible Materialien eingesetzt werden. Bei Ausgestaltung des Auftriebskörpers als Druckkörper mit einer flexiblen Außenhaut können die erforderlichen Kräfte beim Absenken des Körpers in Wassertiefen geringer Wasserbewegung verringert werden, indem das enthaltene Luftvolumen vorübergehend reduziert wird.

Besonders vorteilhaft ist es, wenn die Energiewandler und die Einrichtungen zur Seilsteuerung seewassergeschützt werden. Das wird z.B. erreicht, wenn sie erfindungsgemäß an einem statischen Bauwerk oberhalb des Meeresspiegels angeordnet werden. Ein solcher Ort kann z.B. ein am Meeresboden verankerter Mast oder Turm sein, der ausreichend weit über die höchsten zu erwartenden Wellenkämme herausragt. Durch eine solche Anordnung sind die empfindlichen Bauteile des Systems besser geschützt, wodurch die Funktionssicherheit des Systems deutlich erhöht und der Wartungsaufwand reduziert werden.

Ein besonders günstiger Vorschlag der Erfindung sieht vor, das System in Offshore Windkraftanlagen einzubinden, wobei die seewassergeschützten Einrichtungen zum Energiewandeln sowie die Einrichtungen zur Seilzugsteuerung jeweils am oder im Turm der Windkraftanlage angeordnet sind, bzw. in die Gondel der Windkraftanlage integriert werden. Die bauliche Struktur der Windkraftanlage wird dabei nur durch Druckkräfte belastet und nicht durch Kippmomente, so dass eine Integration des Systems in bereits bestehenden Anlagen, bzw. in Neubauten ohne maßgebliche Änderung der Konstruktion oder Statik möglich ist.

Auch kann in vorteilhafter Weise eine Vielzahl der Systeme zu Modulen eines Energieparks verbunden werden, der allein oder in Kombination mit einem Windpark einrichtbar ist. Die Systeme können derart angeordnet werden, dass ihre Verankerungen mindestens teilweise von mehreren Systemen gleichzeitig genutzt werden. Beim Anschluss mehrerer Systeme an einen Windpark können die Systeme so angeordnet werden, dass sie den Windpark umranden und somit die Energie des Seegangs im Bereich der Windkraftanlagen reduzieren.

In Gebieten großer Wassertiefe können die ortsfesten Bezugspunkte für den Auftriebskörper auch an einer getauchten Konstruktion vorgesehen sein, die durch geeignete Verankerungen in ortsfester Position fixierbar ist oder durch eine geeignete Formgebung eine große hydrodynamische Masse bindet und somit eine hohe Trägheit aufweist. Hierbei kann die Ausrichtung zur Wellenrichtung durch eine Selbstausrichtung des Gesamtsystems um seine Verankerung erfolgen. In diesem Fall genügt je Auftriebskörper eine Kinematik mit zwei Seilen, wovon nur das wellenzugewandte Seil zur Steuerung und Energiewandlung verwendet wird.

Um das System zur Energieauskopplung aus Meereswellen effektiv anzuwenden, wird in einem erfindungsgemäßen Arbeitsverfahren vorgeschlagen, die Führungsseile an der wellenabgewandten Seite zunächst in Abhängigkeit von dem gewünschten Radius und der Neigung der Bahnkurve des Auftriebskörpers in ihrer Länge einzustellen. Sodann werden die Arbeitsseile auf der wellenzugewandten Seite des Auftriebskörpers bei Eintreffen eines Wellenberges arretiert bis eine angestrebte Eintauchtiefe bzw. angestrebte Zugkraft erreicht ist. Anschließend wird eine Bewegung des Auftriebskörpers unter definierter Kraft oder Geschwindigkeit zugelassen, wodurch der Auftriebskörper über das Arbeitsseil mechanische Energie an den Energiewandler überträgt. Nach Erreichen des Wellenberges bewegt sich der Auftriebskörper in seine Ausgangsposition zurück. Währenddessen werden die Arbeitsseile durch das Steuerungssystem unter Spannung wieder eingeholt. Ein neuer Zyklus kann beginnen.

Für eine weitere Leistungssteigerung des erfindungsgemäßen Verfahrens wird vorgeschlagen, die Bewegungen des Auftriebskörpers in seine Ausgangsposition durch eine über das Arbeitsseil eingeleitete Kraft aktiv zu unterstützen. Durch die aktive Rückführung gelangt der Körper schneller in seine Ausgangsposition zurück, wodurch erhebliche Leistungssteigerungen im Bereich kurzer Wellen hoher Frequenz erzielt werden können. Gleichzeitig kann durch die über das Arbeitsseil, bzw. die Arbeitsseile, eingeleiteten Rückstellkräfte ein stärkeres Eintauchen des Körpers in das Wellental ermöglicht werden, wodurch weitere Leistungssteigerungen erzielt werden können.

Die Bewegungscharakteristik des Systems (wie z.B. der Radius des Kreisbogens, die Steigung, Amplitude, Eintauchtiefe, Geschwindigkeiten und Bewegungsrichtung) kann durch das Steuerungssystem eingestellt werden, indem zur Erreichung einer optimalen Bewegungsbahn erfindungsgemäß vor oder während der Bewegung des Auftriebskörpers die Länge des Führungsseils, bzw. der Führungsseile, angepasst wird.

Vorteilhafterweise kann die über das Arbeitsseil eingeleitete Kraft auch zur Einstellung der Eintauchtiefe des Auftriebskörpers in das Wellental eingesetzt werden.

Das beschriebene System weist gegenüber bekannten Vorschlägen die folgenden Vorteile auf:

Die beschriebene Anordnung ermöglicht eine Ausrichtung des Auftriebskörpers und der Bahnkurve entsprechend der aktuellen Wellenfortschrittsrichtung, wodurch auch an Standorten variierender Wellenrichtungen hohe Energieerträge erzielt werden können. Das Gesamtsystem zeichnet sich durch verhältnismäßig hohe Energieerträge und geringe Kosten aus. Der vergleichsweise große Energieertrag wird durch einen hohen Wirkungsgrad der optimierten Bahnkurve und durch eine hohe Wirkbreite auf Grund der quer zur Wellenlaufrichtung ausgerichteten länglichen Form erzielt. Geringe Erstellungs- und Unterhaltskosten resultieren aus der Verwendung der Seilkinematik, die einen geringen Materialeinsatz und eine geringe Anzahl beweglicher Bauteile erfordert und aus der günstigen Positionierung aller empfindlichen Komponenten der Steuerung und Energiewandlung an einem vor Seewasser geschützten Ort außerhalb des Auftriebskörpers.

Mit dem Vorschlag der Kopplung mit Offshore Windkraftanlagen weist das System gegenüber bisherigen Konzepten entscheidende Vorteile auf. Die bauliche Struktur der Windkraftanlage eignet sich besonders zur Anordnung der Energiewandler und Einrichtungen zur Steuerung des Seilzugs und/oder der Seillänge. Die Struktur wird dabei nur durch Druckkräfte belastet und nicht durch Kippmomente. Somit ist eine Nachrüstung des Systems an bestehenden Anlagen, bzw. eine Integration in Neubauten ohne maßgebliche Änderung der Konstruktion möglich.

Das erfindungsgemäße System wird nachfolgend anhand eines Ausführungsbeispiels beschrieben, bei dem der frei ausrichtbare Auftriebskörper mit der Anordnung von Energiewandler und Seilsteuerung außerhalb des Seewassers kombiniert werden.

Es zeigt:
Figur 1 das erfindungsgemäße System in Verbindung mit einer Offshore Windkraftanlage und
Figur 2 die Kopplung eines aus mehreren Systemen bestehenden Wellenenergieparks mit einer Offshore Windkraftanlage.

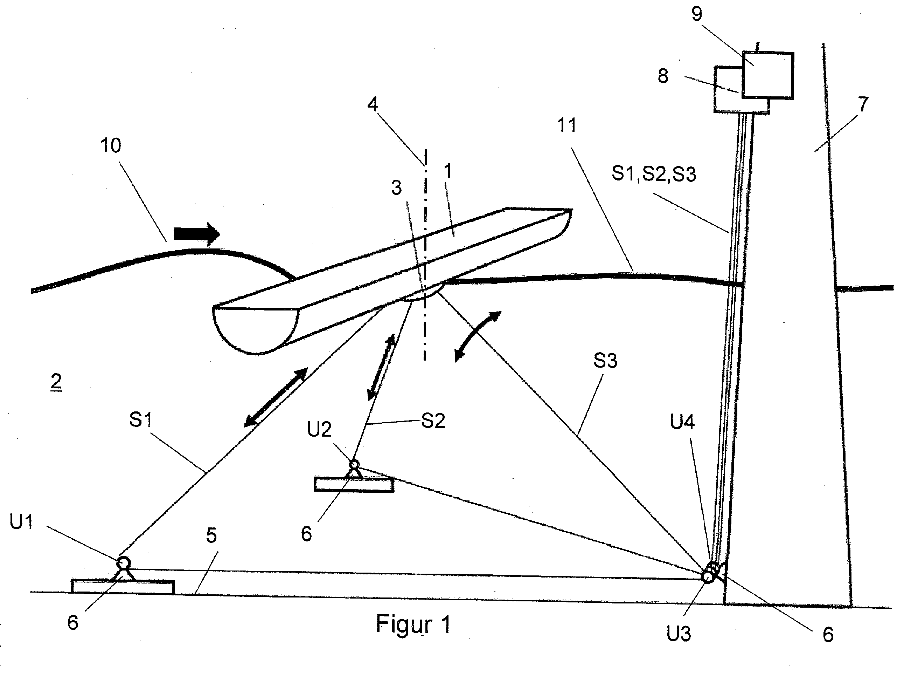

In Figur 1 wird das erfindungsgemäße System grob vereinfacht dargestellt. Mit 1 ist der im Meerwasser 2 schwimmende halbzylindrische Auftriebskörper bezeichnet, dessen untere gewölbte Seite teilweise in das Meerwasser 2 eintaucht. Der in sich geschlossene Auftriebskörper 1 ist hohl und besteht aus korrosionsfestem Metall oder Kunststoff oder ähnlichem seewasserbeständigem Material. Wie erkennbar, weist der Auftriebskörper 1 eine deutlich größere Länge als Breite bzw. Höhe auf und ist auf der Oberseite abgeflacht. Diese Form hat sich besonders bewährt, obgleich auch andere Formen denkbar sind.

An seiner Unterseite ist an dem Auftriebskörper eine Befestigungsvorrichtung 3 für verschiedene Seile S angeordnet. Die Seile S sind passiv angeschlagen, d.h. sie sind dort befestigt, ermöglichen aber gleichzeitig eine Raumbewegung des Auftriebskörpers 1 um die Befestigung 3 der Seile. Im einfachsten Fall ist die Befestigungsvorrichtung 3 an der Unterseite des Auftriebskörpers 1 um die Hochachse 4 des Auftriebskörpers 1 drehbar gelagert, so dass dem Auftriebskörpers 1 eine freie Einstellbarkeit ermöglicht wird.

Wie aus der Figur 1 erkennbar ist, sind an der Befestigungsvorrichtung 3 drei Seile S1, S2 und S3 angeschlagen, die pyramidenförmig jeweils zu Umlenkrollen U1, U2 und U3 unterhalb des Meeresspiegels gespreizt sind. Die Umlenkrollen U1 bis U3 sind im Bereich des Meeresbodens 5 verankert, wozu beispielsweise Gewichtsgründungen oder Pfahlanker verwendet werden können, und bilden ortsfeste Bezugspunkte 6 für den Auftriebskörper 1 und dessen Befestigungsvorrichtung 3. Eine der Umlenkrollen U3 ist in dem hier beschriebenen Beispiel in einem Umlenkrollenblock 4 mit weiteren Umlenkrollen am Fuß eines Turmes 7 einer Windkraftanlage befestigt. Jedes der dargestellten Seile S1 bis S3 ist, von der Befestigungsvorrichtung 3 ausgehend, über eine dieser Umlenkrollen U1 bis U3 abrollbar umgelenkt und zu dem Umlenkrollenblock 4 geführt, von wo aus alle Seile S1 bis S3 nach oben, am Turm 7 der Windkraftanlage entlang, zu einem oberhalb der Meeresoberfläche und außerhalb der Reichweite der Wellen angeordnetem Energiewandler 8 und einer Einrichtung zur Steuerung des Seilzugs und/oder der Seillänge 9 geführt. Jedes der Seile S1, S2, S3 läuft unabhängig von den anderen Seilen um die Umlenkrollen U1, U2 und U3, sowie um die Umlenkrollen des Umlenkrollenblocks 4 und kann separat gesteuert und in einer vorbestimmten Länge fixiert werden.

Der hier nicht im Detail beschriebene Energiewandler 8 besteht im Wesentlichen aus dem mechanisch angetriebenen elektrischen Generator, dem die mechanische Energie aus der Bewegung des Auftriebskörpers über die Seile S1, S2, S3 zugeführt und in einer geeigneten Vorrichtung in eine Drehbewegung zum Antrieb des Generators gewandelt wird. Der im Generator erzeugte Strom wird über - nicht dargestellte Kabel - in das Stromnetz eingespeist. Es ist auch möglich, den elektrischen Generator zwischenzeitlich als Motor zu verwenden.

Das System arbeitet wie folgt:

Eine in Richtung 10 auflaufende Welle 11 erreicht die Breitseite des Auftriebskörpers 1 zuerst an der ihr zugewandten Seite und bewirkt eine Drehung des an den ortsfesten Bezugspunkten 6 gehaltenen Auftriebskörpers 1 um dessen Hochachse 4, die gleichzeitig Drehachse der Befestigungsvorrichtung 3 der Seile S1 bis S3 ist. Im Ergebnis richtet sich der Auftriebskörper 1 quer zur Richtung 10 der auflaufenden Welle 11 aus und bietet eine optimale Angriffsfläche für die Welle 11. Von den straff über die Umlenkrollen U geführten Seilen S dient das Seil S3 an der wellenabgewandten Seite der Führung des Auftriebskörpers 1; seine Länge kann auch während der Bewegung des Auftriebskörpers 1 zur Erreichung einer optimalen Bewegungsbahn angepasst werden. Dieses Seil S3 wird im Folgenden Führungsseil genannt. Da das Seil erst durch seine Funktion zum Führungsseil wird, kann jedes der Seile S1 bis S3 zum Führungsseil werden, sobald es sich auf der wellenabgewandten Seite des Auftriebskörpers 1 befindet.

Die Seile S1 und S2 auf der wellenzugewandten Seite des Auftriebskörpers 1 werden bei Eintreffen eines Wellenberges zunächst mittels der Einrichtung zur Steuerung des Seilzugs und/oder der Seillänge 9 arretiert, bis eine angestrebte Eintauchtiefe des Auftriebkörpers 1 bzw. angestrebte Zugkraft durch die auf den Auftriebskörper 1 wirkende Welle erreicht ist. Unmittelbar danach wird eine Bewegung des Auftriebskörpers 1 unter definierter Kraft oder Geschwindigkeit zugelassen, wodurch über die wellenzugewandten Seile S2 und S3, die im Folgenden Arbeitsseile genannt werden, mechanische Energie an den Generator übertragen wird.

Während der Bewegung des Auftriebskörpers 1 werden die Arbeitsseile S2 und S3, wie die Doppelpfeile symbolisieren, durch die Wirkung der Welle 11 ausgezogen und nach Passieren des Wellenberges mit Hilfe einer durch die Steuerung aufgebrachten Kraft wieder eingeholt. Währenddessen bestimmt das Führungsseil S1 auf der der Welle 11 abgewandten Seite des Auftriebskörpers 1 seine Bewegungsbahn.

Nach Erreichen des Wellenberges bewegt sich der Auftriebskörper 1 selbsttätig in seine Ausgangsposition zurück oder wird durch eine über die Arbeitsseile S2 und S3 eingeleitete Kraft aktiv zurückgeführt. Durch eine aktive Rückführung gelangt der Auftriebskörper 1 schneller in seine Ausgangsposition zurück. Die Rückstellkraft bewirkt außerdem ein erhöhtes Eintauchen des Auftriebskörpers 1 im Wellental, was zu weiteren Leistungssteigerungen führt.

Durch die Einstellung der jeweiligen Seillängen und der auf den Auftriebskörpers 1 wirkenden Kräfte mittels der Einrichtungen zur Steuerung des Seilzugs und/oder der Seillänge 9 kann die Bewegungscharakteristik des gesamten Systems (wie z.B. der Radius des Kreisbogens, die Steigung, Amplitude, Eintauchtiefe, Geschwindigkeiten und Bewegungsrichtung) eingestellt werden, so dass alle Parameter an die aktuellen Wellenbedingungen, wie z.B. Wellenhöhe, Wellenlänge, Periode und Wellenrichtung, angepasst werden können.

Zur verbesserten Nutzung des Richtungsspektrums kann die Bewegungsbahn durch eine individuelle Steuerung der einzelnen Seile S1, S2, S3 an die jeweilige Fortschrittsrichtung der einfallenden Wellenberge angepasst werden. Dies geschieht beispielsweise bei Anordnungen mit zwei Arbeitsseilen S2 und S3, indem für das Arbeitsseil S2 oder S3, aus dessen Richtung eine einzelne Welle 11 einfällt, eine größere Bewegungsamplitude zugelassen wird. Die Anzahl der verwendeten Arbeitsund Führungsseile ist nicht auf die im Beispiel gewählte Anzahl beschränkt, sondern kann nach Bedürfnissen und Gegebenheiten gewählt werden. Jedes der Seile S kann in Abhängigkeit von der Wellenauflaufrichtung als Arbeits- oder Führungsseil eingesetzt werden.

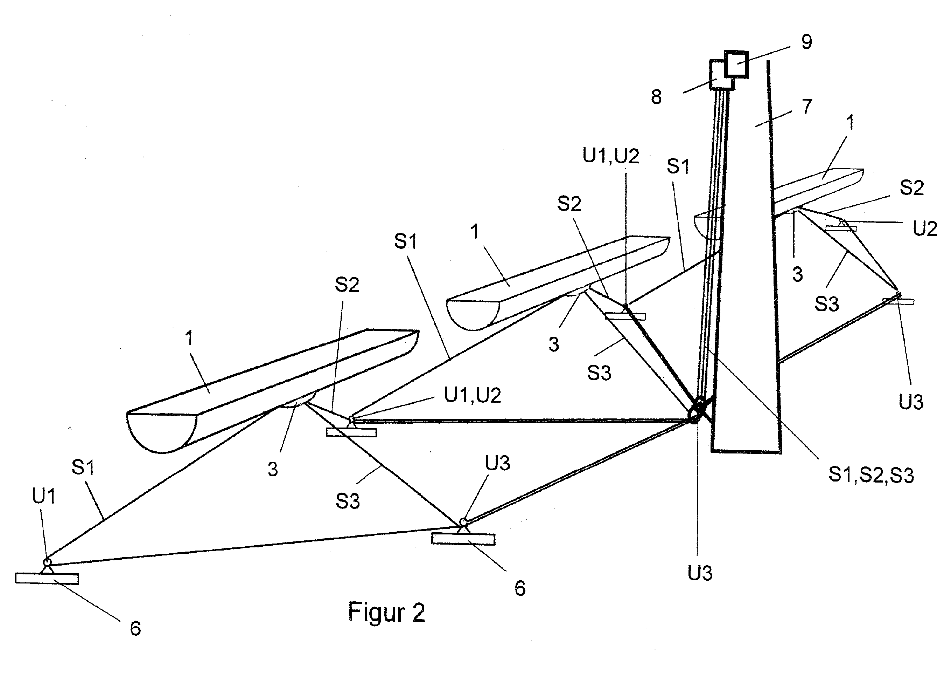

In Figur 2 ist schematisch eine günstige Anwendung des erfindungsgemäßen Systems in einem Energiepark dargestellt, in dem die Windkraftanlagen mit dem System zur Energieauskopplung aus Meereswellen kombiniert wurden. Eine Vielzahl der in Figur 1 beschriebenen Auftriebskörper 1 mit ihrer Kinematik wurde zusammengefasst und über die in Figur 1 beschriebenen Seilsysteme mit dem Turm 7(es können auch mehrere Türme sein) der Windkraftanlage wirkmäßig verbunden. Gleiche Teile sind mit den gleichen, wie in Figur 1 verwendeten, Bezugsziffern beschriftet.

In beiden Beispielen ist es auch denkbar, die Seile im Inneren des Turmes 7 der Windkraftanlage zu führen; ebenso können Energiewandler 8 und/oder die Einrichtungen zur Steuerung des Seilzugs und/oder der Seillänge 9 im Inneren des Turmes geschützt untergebracht werden. Da die bauliche Struktur der Windkraftanlage nur durch Druckkräfte und nicht durch Kippmomente belastet wird, ist eine Nachrüstung des Systems an bestehenden Anlagen, bzw. eine Integration in Neubauten ohne maßgebliche Änderung der Konstruktion möglich.

## Patentansprüche

1. System zur Energieauskopplung aus Meereswellen mit Hilfe eines durch die Bewegung der Meereswellen angeregten, mindestens teilweise in das Meerwasser eintauchenden Auftriebskörpers (1), dessen Längserstreckung ein Vielfaches seiner Höhe und Breite beträgt und von dem aus Seile (S1, S2, S3) zu unterhalb des Auftriebskörpers vorgesehenen, voneinander beabstandeten ortsfesten Bezugspunkten (U1, U2, U3) abgespreizt geführt sind, wobei mindestens eines der Seile als Führungsseil zur Führung des Auftriebskörpers auf einer Bahnkurve und mindestens ein Seil als Arbeitsseil zur Übertragung der Wellenenergie an mindestens einen Energiewandler (8) vorgesehen ist,
**dadurch gekennzeichnet, dass** die Befestigung aller Seile (S) an einer gemeinsamen zentralen Befestigungseinrichtung am Auftriebskörper (1) erfolgt, die eine freie Einstellbarkeit des Auftriebskörpers (1) mindestens in Bezug auf die Wellenrichtung gestattet.

2. System zur Energieauskopplung aus Meereswellen nach Anspruch 1, **dadurch gekennzeichnet, dass** die Seile (S) mittels einer oder mehrerer Befestigungsvorrichtungen (3) am Auftriebskörper (1) passiv angeschlagen sind, von wo ausgehend jedes Seil (S) gegebenenfalls über im Bereich der ortsfesten Bezugspunkte (6) vorgesehene Umlenkmittel (U) zum Energiewandler (8) und zu Einrichtungen zur Steuerung des Seilzugs und/oder der Seillänge (9) geführt ist.

3. System zur Energieauskopplung aus Meereswellen nach Anspruch 1 oder 2, **dadurch gekennzeichnet, dass** mindestens drei Seile (S1, S2 und S3) an dem Auftriebskörper (1) befestigt sind und jedes der Seile (S1, S2 und S3) über das ihm zugeordnete Umlenkmittel (U1, U2 und U3) an jedem der mindestens drei ortsfesten Bezugspunkte (6) zu dem Energiewandler (8) sowie der Einrichtung zur Seilsteuerung und/oder des Seilzuges (9) geführt ist.

4. System zur Energieauskopplung aus Meereswellen nach Anspruch 1 bis 3,
**dadurch gekennzeichnet, dass** jedes der Seile (S1 bis S3) bedarfsweise als Führungsseil für den Auftriebskörper (1) und als Arbeitsseil zur Übertragung der Wellenenergie an den Energiewandler (8) einsetzbar ist.

5. System zur Energieauskopplung aus Meereswellen nach einem der Ansprüche 1 bis 4, **dadurch gekennzeichnet, dass** zur Veränderung der Bewegungsbahn des Auftriebskörpers (1) die wellenabgewandten Führungsseile (S3) in einstellbarer Länge fixierbar und/oder während der Bewegung steuerbar sind.

6. System zur Energieauskopplung aus Meereswellen nach einem der Ansprüche 1 bis 5, **dadurch gekennzeichnet, dass** die Seillänge jedes der wellenzugewandten Arbeitsseile (S2 und S3) während der Bewegung des Auftriebskörpers (1) steuerbar ist.

7. System zur Energieauskopplung aus Meereswellen nach einem der Ansprüche 5 und 6, **dadurch gekennzeichnet, dass** die Steuerung der einzelnen Seile (S) an die jeweilige Fortschrittsrichtung der einfallenden Wellenberge anpassbar ist.

8. System zur Energieauskopplung aus Meereswellen nach einem der Ansprüche 1 bis 7, **dadurch gekennzeichnet, dass** zur aktiven Rückführung des auf einen Wellenberg gehobenen Auftriebskörpers (1) auf jedes der wellenzugewandten Arbeitsseile (S2 und S3) eine steuerbare Zugkraft aufbringbar ist.

9. System zur Energieauskopplung aus Meereswellen nach einem der Ansprüche 1 bis 8, **dadurch gekennzeichnet, dass** der Auftriebskörper (1) zum Schutz vor der Gewalt extremer Wetterbedingungen in Wassertiefen geringer Wasserbewegung absenkbar ist.

10. System zur Energieauskopplung aus Meereswellen nach einem der Ansprüche 1 bis 9, **dadurch gekennzeichnet, dass** Energiewandler (8) und die Einrichtungen zur Seilzugsteuerung und/oder des Seilzuges (9) seewassergeschützt an einem statischen Bauwerk (7) oberhalb des Meeresspiegels angeordnet sind.

11. System zur Energieauskopplung aus Meereswellen nach einem der Ansprüche 1 bis 10, **gekennzeichnet durch** die Einbindung des Systems in Offshore Windkraftanlagen, wobei die seewassergeschützten Einrichtungen zum Energiewandeln (8) sowie die Einrichtungen zur Seilzugsteuerung jeweils an oder in dem Turm (7) oder der Gondel einer Windkraftanlage angeordnet sind.

12. System zur Energieauskopplung aus Meereswellen nach einem der Ansprüche 1 bis 11, **dadurch gekennzeichnet, dass** die ortsfesten Bezugspunkte (6) für den Auftriebskörper (1) an einer getauchten Konstruktion vorgesehen sind, die durch geeignete Verankerungen in ortsfester Position fixierbar ist oder durch eine geeignete Formgebung eine große Trägheit aufweist.

13. System zur Energieauskopplung aus Meereswellen nach einem der Ansprüche 1 bis 12, **dadurch gekennzeichnet, dass** die am Auftriebskörper (1) angeschlagenen Seile (S) zu Seewasser-/Hydraulikpumpen geführt sind, von denen ausgehend Druckleitungen zu Energiewandlern geführt sind, in denen der hydraulische Druck in elektrischer Energie gewandelt wird.

14. Verfahren zur Energieauskopplung aus Meereswellen unter Anwendung des Systems nach Ansprüchen 1 bis 13, **gekennzeichnet durch** die Abfolge der folgenden Schritte:
- die Führungsseile an der wellenabgewandten Seite werden in Abhängigkeit von dem gewünschten Radius und der Neigung der Bahnkurve des Auftriebskörpers in ihrer Länge eingestellt,
- die Arbeitsseile auf der wellenzugewandten Seite des Auftriebskörpers werden bei Eintreffen eines Wellenberges arretiert bis eine angestrebte Eintauchtiefe bzw. angestrebte Zugkraft erreicht ist.
- anschließend wird eine Bewegung des Auftriebskörpers unter definierter Kraft oder Geschwindigkeit zugelassen, wodurch der Auftriebskörper über das Arbeitsseil mechanische Energie an den Energiewandler überträgt.
- nach Erreichen des Wellenberges bewegt sich der Auftriebskörper in seine Ausgangsposition zurück oder wird zurück gezogen.

15. Verfahren zur Energieauskopplung nach Anspruch 14, **dadurch gekennzeichnet, dass** vor oder während der Bewegung des Auftriebskörpers zur Erreichung einer optimalen Bewegungsbahn die Länge des Führungsseils angepasst wird.

## Claims

1. System for extracting energy from sea waves by means of a buoyancy body (1) that is moved by the movement of the sea waves and at least partially immersed in the sea water, the buoyancy body having a longitudinal extension which is a multiple of its height and width, wherein cables (S1, S2, S3) are routed in a splayed-out manner from the buoyancy body to mutually spaced stationary reference points (U1, U2, U3) provided beneath the buoyancy body, wherein at least one of the cables is provided as a guiding cable for guiding the buoyancy body on a trajectory, and at least one cable is provided as a working cable for transmitting the wave energy to at least one energy converter (8),
**characterized in that** attachment of all cables (S) is carried out at a common central attachment device on the buoyancy body (1) which allows for free adjustment of the buoyancy body (1) at least in relation to the wave direction.

2. System for extracting energy from sea waves according to claim 1, **characterized in that** the cables (S) are passively attached by one ore several attachment devices (3) to the buoyancy body, from where running each cable (S) is routed to the energy converter (8) and to control devices for controlling the cable pull and/or the cable length (9), where appropriate via deflection means (U) provided in the region of the stationary reference points (6).

3. System for extracting energy from sea waves according to claim 1 or 2, **characterized in that** at least three cables (S1, S2 and S3) are attached to the buoyancy body (1) and each of the cables (S1, S2 and S3) is routed via the respective deflection means (U1, U2 and U3) in each of the at least three stationary reference points (6) to the energy converter (8) as well as to the device for controlling the cable and/or the cable pull (9).

4. System for extracting energy from sea waves according to claim 1 to 3, **characterized in that** each of the cables (S1 to S3) is applicable on demand as guiding cable for the buoyancy body (1) and as working cable for transferring the wave energy to the energy converter.

5. System for extracting energy from sea waves according to one of claims 1 to 4, **characterized in that** in order to change the movement path of the buoyancy body (1) the guiding cables (S3) remote from the waves are fixable at an adjustable length and/or are controllable during the movement.

6. System for extracting energy from sea waves according to one of claims 1 to 5, **characterized in that** the cable length of each of the working cables closest to the waves (S2 and S3) is controllable during movement of the buoyancy body (1).

7. System for extracting energy from sea waves according to one of claims 5 and 6, **characterized in that** control of the individual cables (S) is adaptable to the respective advancement direction of the incoming wave crests.

8. System for extracting energy from sea waves according to one of claims 1 to 7, **characterized in that** in order to achieve active return of the buoyancy body (1) lifted onto a wave crest, a controllable pulling force is applicable to each of the working cables closest to the waves (S2 and S3).

9. System for extracting energy from sea waves according to one of claims 1 to 8, **characterized in that** in order to provide protection against the violence of extreme weather conditions, the buoyancy body (1) can be lowered into water depths where there is little water movement.

10. System for extracting energy from sea waves according to one of claims 1 to 9, **characterized in that** the energy converter (8) and the devices for controlling the cable pull and/or the cable length (9) are arranged in a manner protected against sea water on a static structure work (7) above sea level.

11. System for extracting energy from sea waves according to one of claims 1 to 10, **characterized by** the integration of the system in offshore wind power installations, wherein the devices for energy conversion (8) protected against sea water as well as the devices for controlling cable pull are respectively arranged on or in the tower (7) or the pod of a wind power installation.

12. System for extracting energy from sea waves according to one of claims 1 to 11, **characterized in that** the stationary reference points (6) for the buoyancy body (1) are provided on an immersed structure which is fixable in stationary position by appropriate anchoring or which features a great inertness due to an appropriate shaping.

13. System for extracting energy from sea waves according to one of claims 1 to 12, **characterized in that** the cables (S) fastened to the buoyancy body (1) are routed to water/hydraulic pumps from which out-going pressure lines are run to energy converters in which the hydraulic pressure is converted into electrical energy.

14. Method for extracting energy from sea waves by applying the system according to claims 1 to 13, **characterized by** the sequence of the following steps:
- the guiding cables on the side remote from the waves are adjusted in length in dependence upon the desired radius and the inclination of the buoyancy body's trajectory,
- on arrival of a wave crest, the working cables on the side of the buoyancy body closest to the waves are stopped until a target immersion depth resp. target pulling force is reached,
- subsequently, a movement of the buoyancy body is allowed at a defined force or speed, whereby the buoyancy body transfers mechanical energy to the energy converter by means of the working cable,
- after the wave crest is reached, the buoyancy body moves back or is pulled back to its starting position.

15. Method for extracting energy according to claim 14, **characterized in that** in order to achieve an optimal movement path, the length of the guiding cable is adjusted before or during the movement of the buoyancy body.

## Revendications

1. Système d'extraction d'énergie des houles à l'aide d'un corps flottant (1) bougé par le mouvement des houles et immergé au moins en partie dans l'eau de mer, le corps flottant ayant une extension longitudinale qui est un multiple de son hauteur et largeur, des câbles (S1, S2, S3) étant menés d'une manière déployée du corps flottant vers des points de référence (U1, U2, U3) stationnaires mutuellement écartés et prévus sous le corps flottant, au moins un des câbles étant prévu comme câble guidant pour le guidage du corps flottant le long d'une trajectoire et au moins un câble comme câble travaillant pour transmission de l'énergie des houles à au moins un convertisseur d'énergie (8), **caractérisé en ce que** l'amarrage de tous les câbles (S) s'effectue au corps flottant (1) à un dispositif d'attache central commun ce qui permet libre ajustement du corps flottant (1) au moins relatif à la direction des vagues.

2. Système d'extraction d'énergie de la houle selon revendication 1, **caractérisé en ce que** les câbles (S) sont amarrés au corps flottant d'une manière passive par le biais d'un ou plusieurs dispositifs d'attache (3), d'où émanant chaque câble (S) est mené vers le convertisseur d'énergie (8) et vers des dispositifs de commande de la traction des câbles et/ou de la longueur des câbles (9), le cas échéant via des moyens de déroutement (U) prévus proche des points de référence stationnaires (6).

3. Système d'extraction d'énergie de la houle selon revendication 1 or 2, **caractérisé en ce qu'**au moins trois câbles (S1, S2 et S3) sont amarrés au corps flottant (1) et chacun des câbles (S1, S2 et S3) est mené via le moyen de déroutement respectif (U1, U2 et U3) dans chacun des au moins trois points de référence stationnaires (6) vers le convertisseur d'énergie (8) ainsi que vers le dispositif de commande des câbles et/ou de la traction des câbles (9).

4. Système d'extraction d'énergie de la houle selon revendication 1 à 3, **caractérisé en ce que** chacun des câbles (S1 à S3) est utilisable selon les besoins comme câble guidant pour le corps flottant (1) et comme câble travaillant pour la transmission de l'énergie des houles au convertisseur d'énergie (8).

5. Système d'extraction d'énergie de la houle selon une des revendications 1 à 4, **caractérisé en ce que** pour modifier le trajet du mouvement du corps flottant (1), les câbles guidants détournés des vagues peuvent être fixés à une longueur ajustable et/ou commandés durant le mouvement du corps flottant (1).

6. Système d'extraction d'énergie de la houle selon une des revendications 1 à 5, **caractérisé en ce que** la longueur de câble de chacun des câbles travaillants tournés vers les vagues (S2 et S3) peut être commandée durant le mouvement du corps flottant (1).

7. Système d'extraction d'énergie de la houle selon une des revendications 5 et 6, **caractérisé en ce que** la commande des câbles individuels (S) peut être adapté à la direction de propagation des crêtes des vagues qui arrivent.

8. Système d'extraction d'énergie de la houle selon une des revendications 1 à 7, **caractérisé en ce qu'**une force de traction commandable peut être appliquée à chacun des câbles travaillants tournés vers les vagues (S2 et S3) pour retour d'une manière active du corps flottant (1) soulevé sur une crête d'une vague.

9. Système d'extraction d'énergie de la houle selon une des revendications 1 à 8, **caractérisé en ce que** le corps flottant (1) peut être baissé à des profondeurs d'eau avec moins de mouvement d'eau pour prévoir de la protection contre la puissance des conditions de météo extrêmes.

10. Système d'extraction d'énergie de la houle selon une des revendications 1 à 9, **caractérisé en ce que** le convertisseur d'énergie (8) et les dispositifs de commande de la traction des câbles et/ou de la longueur des câbles (9) sont disposés (7) au-dessus du niveau de la mer d'une manière protégée contre l'eau de mer.

11. Système d'extraction d'énergie de la houle selon une des revendications 1 à 10, **caractérisé par** l'intégration du système dans des éoliennes offshore, les dispositifs pour convertir de l'énergie (8) protégés contre l'eau de mer ainsi que les dispositifs de commande de la traction des câbles étant disposés respectivement à ou dans la tour (7) ou la gondole d'une éolienne.

12. Système d'extraction d'énergie de la houle selon une des revendications 1 à 11, **caractérisé en ce que** les points de référence stationnaires (6) pour le corps flottant (1) sont prévus à une construction plongée qui peut être fixée en position stationnaire par des ancrages appropriés ou qui présente une grande inertie du fait d'un façonnement approprié.

13. Système d'extraction d'énergie de la houle selon une des revendications 1 à 12, **caractérisé en ce que** les câbles (S) amarrés au corps flottant (1) sont menés vers des pompes hydrauliques/d'eau de mer, d'où émanent des conduites forcées qui sont menés vers des convertisseurs d'énergie dans lesquels la pression hydraulique est convertie en énergie électrique.

14. Méthode d'extraction d'énergie de la houle en appliquant le système selon revendications 1 à 13, **caractérisée par** la suite des étapes suivantes :
- les câbles guidants du côté détourné des vagues sont ajustés en longueur en dépendance du radius désiré et de l'inclinaison de la trajectoire du corps flottant,
- quand une crête d'une vague arrive, les câbles travaillants du côté tourné vers les vagues du corps flottant sont arrêtés jusqu'à ce qu'une profondeur d'immersion visée ou bien une force de traction visée est atteinte,
- ensuite, un mouvement du corps flottant est permis selon une force ou vitesse déterminée, par quoi le corps flottant transmet de l'énergie mécanique par le câble travaillant au convertisseur d'énergie,
- après avoir atteint la crête de la vague, le corps flottant bouge ou est bougé en arrière vers sa position de départ.

15. Méthode for d'extraction d'énergie selon revendication 14, **caractérisé en ce que** la longueur du câble guidant est ajusté avant ou durant le mouvement du corps flottant pour arriver à un trajet de mouvement optimal.
